# EUROPEAN PATENT SPECIFICATION

(11) **EP 1 371 883 B1**
(45) Date of publication and mention of the grant of the patent: **17.08.2005**
(21) Application number: 03013068.6
(22) Date of filing: 10.06.2003
(51) Int. Cl.: F16H 61/26, B62D 33/073

(54) **Control device for the gearbox of a commercial vehicle provided with a tilting cab**
Schaltvorrichtung für Getriebe eines Nutzfahrzeugs mit kippbarem Fahrerhaus
Dispositif de commande pour boîte à vitesses d'un véhicule utilitaire avec cabine basculante

(30) Priority: 11.06.2002 IT TO20020493
(43) Date of publication of application: 17.12.2003
(73) Proprietor: IVECO S.p.A., 10156 Torino (IT)
(72) Inventor: Benetti, Antonio, 25010 San Zeno Naviglio (IT)
(74) Representative: Gervasi, Gemma, Dr.

(56) References cited:
- EP-A- 0 163 950
- DE-A- 2 457 017
- GB-A- 1 453 550
- PATENT ABSTRACTS OF JAPAN vol. 007, no. 031 (M-192), 8 February 1983 (1983-02-08) & JP 57 186523 A (HINO JIDOSHA KOGYO KK), 17 November 1982 (1982-11-17)

## Description

The present invention relates to a control device for the gearbox of a commercial vehicle provided with a tilting cab.

It is known that medium and large commercial vehicles are normally provided with a tilting cab to allow access to the power unit, which is supported by the chassis below the cabin itself.

The gearbox, which forms part of the power unit, is operated manually by way of a control means comprising a gear change lever disposed in the cab, an operating member for the gearbox carried by the gearbox itself and control transmission means interposed between the gear change lever and the operating member. When the cab is tilted, the connection point between the control device and the transmission means is displaced along a circumferential arc centred on the pivot axis of the cab, and the transmission means have to allow this displacement.

So-called "monorod" control devices are known, see for instance GB 1453550 A, in which said transmission means comprise a single rod which can be extended telescopically and which is interposed between the gear change lever and the operating member. Devices of this type have limitations in use, since a substantially rectilinear free path is required between the lever and the gear change operating member; moreover, it is necessary to ensure that the rod does not interfere with adjacent members when it passes from the retracted configuration into the extended configuration, also taking into account that the rod does not only have a telescopic extending movement but also a rotating movement to follow the displacement of the connection point to the gear change lever during the tilting of the cab.

To resolve this problem, solutions have been proposed in which the transmission of the control from the gear change lever to the operating member of said gearbox is effected by means of a pair of rods mutually articulated by means of an intermediate ball joint connected the vehicle chassis; the rod connected to the gear change lever is telescopic and the other bar is rigid , see for instance EP 163 950 A, disclosing all features of the preamble of claim 1. In this way, by suitably choosing the connecting position of the joint, the rods can be arranged along a broken line so as to resolve possible problems in respect of space requirement; moreover; the fixed rod remains substantially stationary during the tilting of the cab, thereby further reducing problems in respect of interference with other components.

Although control devices of this latter type are more versatile, they are more complicated and expensive than "monorod" transmission devices.

It is the object of the present invention to devise a control device for the gearbox of a commercial vehicle provided with a tilting cab which does not have the drawbacks associated with the above-mentioned devices.

This object is achieved by the present invention in that it relates to a control device for the gearbox of a commercial vehicle provided with a tilting cab 4, comprising a gear change lever which can be operated manually and is connected to the cab, an operating member of the gearbox carried by the gearbox itself and transmission means connected in an articulated manner to the gear change lever at one end thereof and to the operating member of the gearbox at an opposite end thereof, said transmission means comprising a first rigid rod, a second rod which can be extended telescopically along an axis, and articulation means connecting said rods together, characterised in that said transmission means comprise coupling means which can be operated selectively to connect said rods together rigidly.

With a view to a better understanding of the present invention a preferred embodiment will be described below by way of example and non-restrictively with reference to the accompanying drawings, in which:
Figure 1 is schematic view in side elevation of a gear change control device designed in accordance with the present invention;
Figure 2 is a schematic view from the rear of the control device in Figure 1;
Figure 3 is a side view, partly in section, of a telescopic rod forming part of the device in Figure 1, in a retracted configuration;
Figure 4 is a section of the rod in Figure 3, in an extended configuration, and
Figure 5 is a section of a detail of the device in Figure 1, on an enlarged scale.

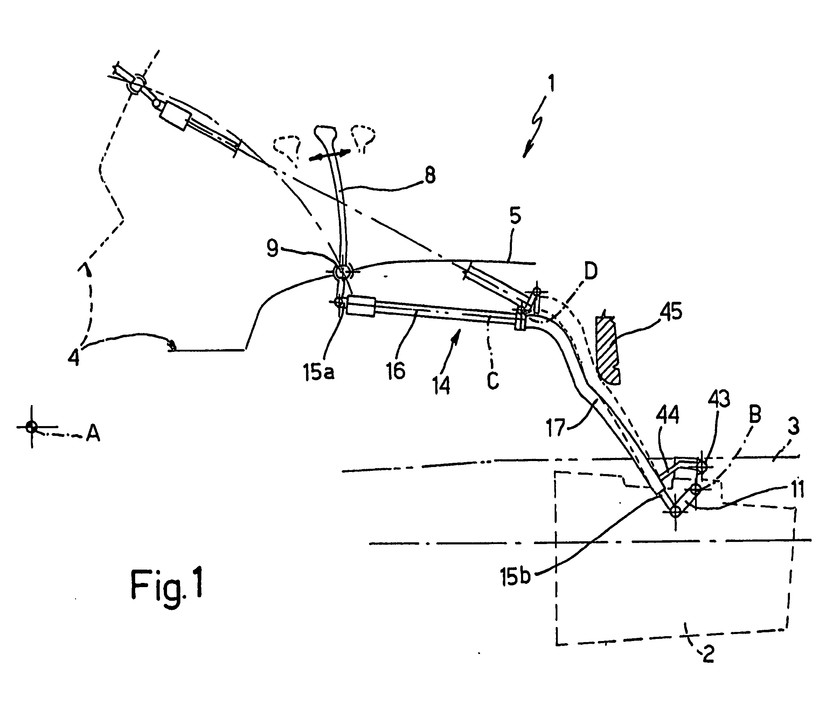

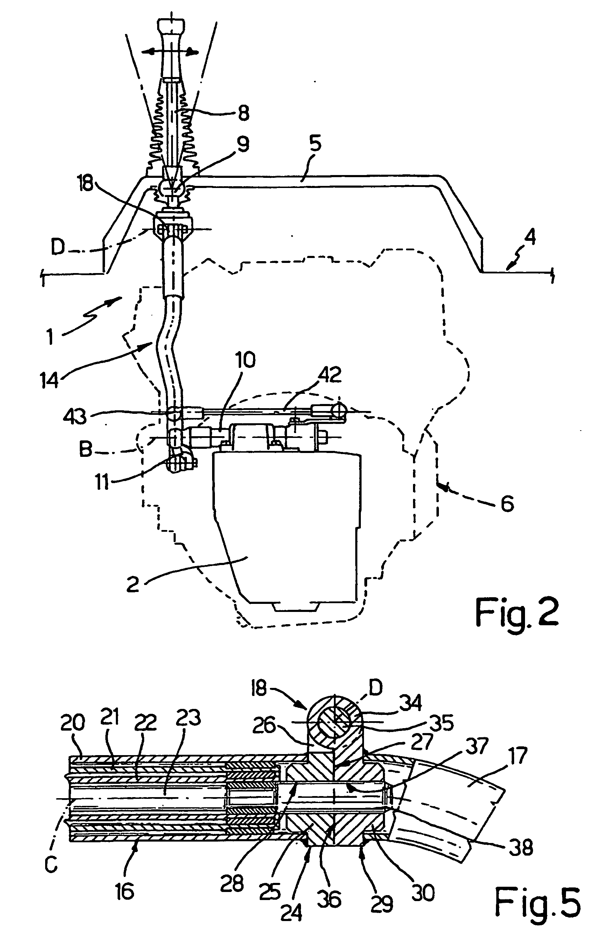

Referring to Figures 1 and 2 the reference numeral 1 generally denotes a control device for the gearbox 2 of a commercial vehicle (not shown) provided with a chassis 3 and with a tilting cab 4, of which only the floor 5 is partly illustrated.

The gearbox 2 forms part of a power unit 6 which is supported by the chassis 3 under the cab 4. In particular, the cab 4 can be tilted about a transverse axis A with respect to the vehicle and disposed in a lower front zone of said cab, so as to pass from a normal operating position indicated in solid line into a raised position indicated in dashed line, in which the cab 4 allows access to the power unit 6.

The device 1 comprises a gear change lever 8 connected to the floor 5 of the cab 4 by means of a ball joint 9; the gear change lever 8 can be operated manually, in known manner, so as to carry out gear selection movements (Figure 2) which comprise rotations in a transverse plane with respect to the vehicle (Figure 2), and gear engagement movements of the gears defined by rotations in longitudinal planes with respect to the vehicle (Figure 1).

The gearbox 2 is provided with a rod 10 for the selection and engagement of the gears, which has a transverse axis B with respect to the vehicle and which is adapted to control in known manner the selection of the gears by way of axial displacements along the axis B and the engagement of the gears by way of rotation about the axis B.

The device 1 further comprises, in known manner, an operating lever 11 for the gearbox 2 connected to the operating rod 10 and extending radially from the latter.

Finally, the device 1 comprises a transmission member 14 having one end 15a connected in an articulated manner to the gear change lever and an opposite end 15b connected in an articulated manner to the operating lever 11 for the gearbox 2.

The transmission member 14 essentially comprises a telescopic rod 16 and a rigid bar 17, which are connected to one another by means of an intermediate pivot 18 and define respectively the end 15a and the end 15b of the transmission member 14 (Figure 1).

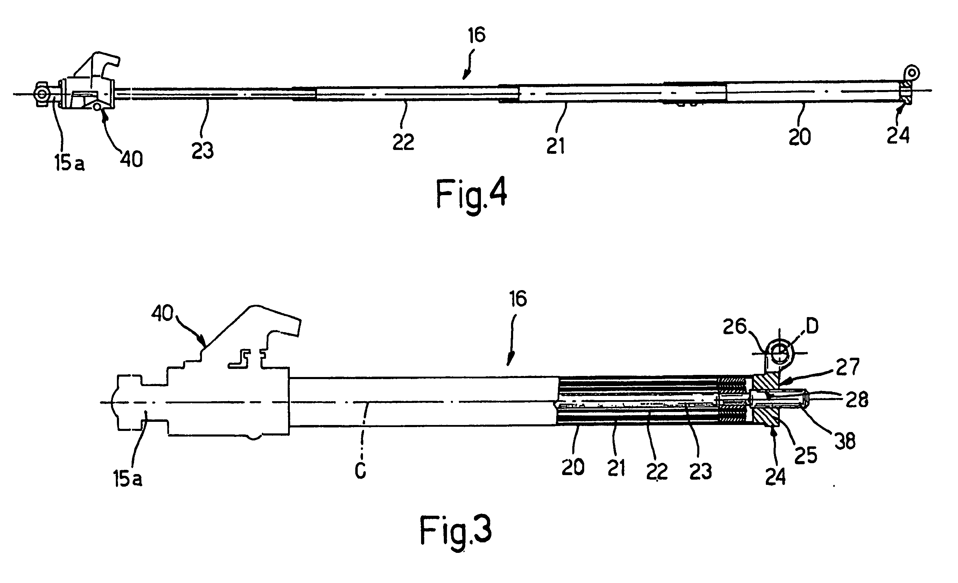

As is clearly shown in Figures 3 and 4, the telescopic rod 16, with an axis C, is formed by a plurality of tubular barrels 20,21,22,23, for example four, which slide in one another.

The inner barrel 23 is secured to the end 15a of the transmission member 14.

The barrel 20 is secured to an end member 24 which defines an opposite end of the telescopic rod 16.

The end member 24 comprises integrally a bush 25 coaxial to the barrel 20 and welded thereto, and a first member 26 of the pivot 18 extending so as to project radially and defining a pivot axis D orthogonal to the axis C of the telescopic rod 16 and outside the latter. The bush 25 is delimited axially by a free end surface 27 orthogonal to the axis C and containing the axis D, and having an axial hole 28.

Similarly, the rod 17 is connected to the end 15b of the transmission member 14 and has, at an opposite end thereof, an end member 29 (Figure 5) comprising integrally a bush 30 coaxial to the end portion of the rod 17 and welded thereto, and a second member 34 of the pivot 18, extending radially so as to protrude radially and articulated to the first pivot member 26 by means of a pin 35 with an axis D.

The bush 30 is delimited axially by a free end surface 36 orthogonal to the axis C and containing the axis D, and it has an axial hole 37 having the same diameter as the hole 28.

At one end of the inner barrel 23 of the telescopic rod 16 opposite the end 15a there is fastened a cap 38 which, in the retracted position of the telescopic rod 16, extends through the hole 28 of the end member 24.

Finally, the telescopic rod 16 is provided with a locking means 40 of known type and, therefore, not described in detail, which locks the rod in the retracted position; the locking means 40 is provided with a connector 41 for connection to a hydraulic control circuit (not shown) and can be released by way of a pressure signal received via the connector 41.

Finally, the control device 1 comprises a reaction rod 42 (Figure 2) which is disposed in a substantially transverse direction and has one end connected to the gearbox 2 and one end connected by means of a ball joint 43 to a bracket 44 rigidly attached to the rigid rod 17 in the vicinity of the end 15b of the transmission member 14.

The mode of operation of the device 1 is the following.

When the cab 4 is in the normal lowered position, the telescopic rod 16 is locked in the retracted position of the locking means 40; the two end members 24,29, respectively of the telescopic rod 16 and of the rod 17, have the respective end surfaces 27,34 in mutual contact. The cap 38 of the inner barrel 23 of the telescopic rod 16 engages in the respective holes 28,37 of said end members 24,29 and, therefore, joins together the telescopic rod 16 and the rigid rod 17. Therefore, the transmission member 14 behaves like a single rigid rod and the control device 1 acts like the monorod devices of known type. The selection and engagement movements of the gear change lever 8 are transmitted by the transmission member 14, for which the joint 43 substantially defines a fulcrum, to the lever 11 for operating the gearbox 2, and are respectively converted thereby into rotations and axial displacements of the rod 10 for operating the gearbox 2.

When the can 4 is tilted, a hydraulic control disengages the locking means 40, thereby enabling the withdrawal of the telescopic rod 16. When the cab is raised (Figure 1), the end 15a of the transmission member 14 describes a circumference centred on the axis A and, therefore, tends to withdraw the barrel 23 of the telescopic rod 16 and, at the same time, to cause the transmission member 14 to rotate upwards. When the withdrawal of the barrel 23 is sufficient to disengage the cap 38 from the hole 35 of the end member 29 of the rigid rod 17, the telescopic rod 16 and the rod 17 are free to rotate relative to one another about the pivot 18 and thus to adopt a "broken" configuration which may be necessary for reasons of interference with other components.

In particular, it is possible for the rigid rod 17, during the tilting of the cab 3, to come into abutment with a part 45 of the vehicle, the dimensions of which are indicated schematically in Figure 1.

The rotation of the rigid bar 17 is thus arrested but the tilting of the cab is made possible owing to the fact that the telescopic rod 16 rotates relative to the rod 17 about the pivot 18. The extension of the rod 16 may continue up to the full tilting position of the cab 4 (Figure 1, position indicated in dashed line).

The return of the cab 4 into the normal operating position produces an inverse sequence of movements with respect to that described. In the vicinity of the end of the retraction travel of the telescopic rod 16, the end members 24,29 of the rod 16 and of the rigid rod 17 are arranged mutually in abutment, and the cap 38 again extends through the hole 28 of the end member 24 and engages in the hole 35 of the end member 29. Therefore, the cap 38 and the end members 25,29 together define a coupling between the telescopic rod 16 and the rigid rod 17, which is brought about automatically in the retracted position of the transmission member 14 and which is disengaged automatically when the telescopic rod 16 is extended.

When the cab 4 has returned to the normal operating position, the locking means 40 is re-engaged, thus causing the transmission member 14 to become rigid again.

The advantages which can be achieved with the present invention are evident from a study of the features of the control device 1 designed in accordance therewith.

In particular, as a result of the automatic coupling and uncoupling between the telescopic rod 16 and rigid rod 17, the transmission member 14 behaves like a rigid bar when the cab 3 is lowered and like a pair of mutually articulated rods when it is raised. This makes it possible to reduce the operational limits associated with the single rod solutions and, at the same time, to eliminate the complexity and additional costs associated with the known solutions using two rods connected to one another by a supported joint.

Finally, it is evident that the device 1 can be subject to modifications and variations without departing from the scope of protection of the claims.

## Claims

1. A control device (1) for the gearbox (2) of a commercial vehicle provided with a tilting cab (4), comprising a gear change lever (8) which can be operated manually and is connected to the cab (4), an operating member (11) of the gearbox (2) carried by the gearbox (2) itself and transmission means (14) connected in an articulated manner to the gear change lever (8) at one end (15a) thereof and to the operating member (11) of the gearbox (2) at an opposite end (15b) thereof, said transmission means (14) comprising a first rigid rod (17), a second rod (16) which can be extended telescopically along an axis (C), and articulation means (18) connecting said rods (16,17) together, **characterised in that** said transmission means (14) comprise coupling means (38,29) which can be operated selectively to connect said rods (16,17) together rigidly.

2. A device according to claim 1, **characterised in that** said coupling means (38,29) can be engaged automatically when the cab (4) is in the lowered position and can be disengaged automatically when said cab (4) is tilted.

3. A device according to claim 1 or 2, **characterised in that** said coupling means (38,29) comprise a seating (37) carried by one (17) of said rods (16,17) and an engagement member carried by another (16) of said rods (16,17).

4. A device according to claim 3, **characterised in that** said second rod (16) comprises a plurality of tubular barrels (20,21,22,23) which are coaxial to one another and which can move axially in one another, an outer barrel (20) of said barrels (20,21,22,23) being connected to the first rod (17) by means of said articulation means, an inner barrel (23) of said barrels (20,21,22,23) carrying said coupling member (38), said first rod (17) carrying said seating (37).

5. A device according to claim 4, **characterised in that** said articulation means comprise a pivot (18) having an axis (D) perpendicular to said axis (C) of said second rod (16) and externally of said rods (16,17).

6. A device according to claim 5, **characterised in that** said first rod (17) and said outer barrel (20) of said second rod (16) comprise respective end members (24,29) defining respective members (26,34) of said pivot (18), said end members (24,29) being provided with respective end surfaces (27,36) adapted to co-operate in mutual abutment in an associated rigid connecting position between said rods (16,17).

7. A device according to claim 6, **characterised in that** said end member of said first rod (17) has an axial hole (37) defining said seating, the inner barrel (23) of said second rod (16) having a cap (38) defining said coupling member and projecting beyond said end surface (27) of the end member (24) of the outer barrel (20), in a retracted state of said second rod (16), so as to engage said seating (37).

## Patentansprüche

1. Schaltvorrichtung (1) für das Getriebe (2) eines Nutzfahrzeugs mit einem kippbaren Fahrerhaus (4), umfassend einen Schalthebel (8), der von Hand bedient werden kann und mit dem Fahrerhaus (4) verbunden ist, ein vom Getriebe (2) selbst getragenes Betätigungselement (11) für das Getriebe (2) und ein Übertragungsmittel (14), das gelenkig an einem Ende (15a) mit dem Schalthebel (8) und am gegenüberliegenden Ende (15b) mit dem Betätigungselement (11) für das Getriebe (2) verbunden ist, wobei das genannte Übertragungsmittel (14) eine erste starre Stange (17), eine zweite, entlang einer Achse (C) telekopisch ausziehbare Stange (16) sowie ein gelenkiges Verbindungsmittel (18) umfasst, das die genannten Stangen (16, 17) miteinander verbindet, **dadurch gekennzeichnet, dass** das genannte Übertragungsmittel (14) ein Kupplungsmittel (38, 29) umfasst, das wahlweise bedient werden kann, um die genannten Stangen (16, 17) starr miteinander zu verbinden.

2. Vorrichtung gemäß Anspruch 1, **dadurch gekennzeichnet, dass** das genannte Kupplungsmittel (28, 29) automatisch eingeklinkt werden kann, wenn sich das Fahrerhaus (4) in der abgesenkten Position befindet, und automatisch ausgeklinkt werden kann, wenn das genante Fahrerhaus (4) gekippt wird.

3. Vorrichtung gemäß Anspruch 1 oder 2, **dadurch gekennzeichnet, dass** das genannte Kupplungsmittel (38, 29) Folgendes umfasst: eine Sitzfläche (37), die von einer (17) der genannten Stangen (16, 17) getragen wird, und ein Einklinkelement, das von einer anderen (16) der genannten Stangen (16, 17) getragen wird.

4. Vorrichtung gemäß Anspruch 3, **dadurch gekennzeichnet, dass** die genannte zweite Stange (16) eine Vielzahl von rohrförmigen Zylindern (20, 21, 22, 23) umfasst, die koaxial zueinander angeordnet sind und sich in axialer Richtung in einander bewegen können, wobei ein äußerer Zylinder (20) der genannten Zylinder (20, 21, 22, 23) über die genannte gelenkige Verbindungsmittel mit der ersten Stange (17) verbunden ist und ein innerer Zylinder (23) der genannten Zylinder (20, 21, 22, 23) das genante Kupplungselement (38) trägt und wobei weiter die genannte erste Stange (17) die genannte Sitzfläche (37) trägt.

5. Vorrichtung gemäß Anspruch 4, **dadurch gekennzeichnet, dass** das genannte gelenkige Verbindungsmittel ein Drehgelenk (18) umfasst, das eine zur genannten Achse (C) der genannten zweiten Stange (16) senkrecht stehende Achse (D) besitzt, die außerhalb der genannten Stangen (16, 17) liegt.

6. Vorrichtung gemäß Anspruch 5, **dadurch gekennzeichnet, dass** die genannte erste Stange (17) und der genannte äußere Zylinder (20) der genannten zweiten Stange (16) jeweils Endelemente (26, 34) aufweisen, die mit entsprechenden Endflächen (27, 36) versehen sind, die so miteinander zusammenwirken können, dass sie, wenn sich die genannten Stangen (16, 17) in einer starren Verbindungsposition befinden, aneinander anliegen.

7. Vorrichtung gemäß Anspruch 6, **dadurch gekennzeichnet, dass** das genannte Endelement der genannten ersten Stange (17) ein axiales Loch (37) aufweist, das die genannte Sitzfläche definiert, wobei der genannte innere Zylinder (23) der genannten zweiten Stange (16) eine Kappe (38) besitzt, die das genannte Kupplungselement definiert und im zurückgezogenen Zustand der genannten zweiten Stange (16) über die genannte Endfläche (27) des Endelements (24) des äußeren Zylinder hinausragt und so in die genannte Sitzfläche (37) eingreift.

## Revendications

1. Dispositif de commande (1) pour la boîte de vitesses (2) d'un véhicule utilitaire avec cabine basculante (4), comprenant un levier de changement de vitesse (8) qui peut être actionné manuellement et est relié à la cabine (4), un élément de manoeuvre (11) de la boîte de vitesses (2) supporté par la boîte de vitesses (2) elle-même, et des moyens de transmission (14) reliés, à une extrémité (14a), de manière articulée au levier de changement de vitesse (8), et, à l'extrémité opposée (15b), à l'élément de manoeuvre (11) de la boîte de vitesses (2), lesdits moyens de transmission (14) comprenant une première barre rigide (17), une seconde barre (16) pouvant être allongée de manière télescopique le long d'un axe (C), et des moyens d'articulation (18) reliant lesdites barres (16, 17) ensemble, **caractérisé en ce que** lesdits moyens de transmission (14) comprennent des moyens de couplage (38, 29) pouvant être actionnés sélectivement pour relier lesdites barres (16, 17) rigidement ensemble.

2. Dispositif selon la revendication 1, **caractérisé en ce que** lesdits moyens de couplage (38, 29) peuvent être mis en prise automatiquement lorsque la cabine (4) est dans la position abaissée et peuvent être mis hors de prise automatiquement lorsque ladite cabine (4) est basculée.

3. Dispositif selon la revendication 1 ou 2, **caractérisé en ce que** lesdits moyens de couplage (38, 29) sont constitués d'un siège (37) supporté par une (17) desdites barres (16, 17) et un élément d'enclenchement supporté par une autre (16) desdites barres (16, 17).

4. Dispositif selon la revendication 3, **caractérisé en ce que** ladite seconde barre (16) comporte une pluralité de corps tubulaires (20, 21, 22, 23) mutuellement coaxiaux et pouvant se déplacer axialement les uns dans les autres, un corps tubulaire extérieur (20) parmi lesdits corps tubulaires (20, 21, 22, 23) étant relié à la première barre (17) par l'intermédiaire desdits moyens d'articulation, un corps tubulaire intérieur (23) parmi lesdits corps tubulaires (20, 21, 22, 23) supportant ledit élément de couplage (38), ladite première barre (17) supportant ledit siège (37).

5. Dispositif selon la revendication 4, **caractérisé en ce que** lesdits moyens d'articulation comprennent un pivot (18) ayant un axe (D) perpendiculaire audit axe (C) de ladite seconde barre (16) et situé à l'extérieur desdites barres (16, 17).

6. Dispositif selon la revendication 5, **caractérisé en ce que** ladite première barre (17) et ledit corps tubulaire extérieur (20) de ladite seconde barre comprennent des éléments d'extrémité respectifs (24, 29) définissant des éléments respectifs (26, 34) dudit pivot (18), lesdits éléments d'extrémité (24, 29) présentant des surfaces d'extrémité respectives (27, 36) adaptées pour coopérer en butée mutuelle dans une position de connexion rigide associée entre lesdites barres (16, 17).

7. Dispositif selon la revendication 6, **caractérisé en ce que** ledit élément d'extrémité de ladite première barre (17) comporte un orifice axial (37) définissant ledit siège, le corps tubulaire intérieur (23) de ladite seconde barre (16) comprenant un bouchon (38) définissant ledit élément de couplage et se projetant au-delà de ladite surface d'extrémité (27) de l'élément d'extrémité (24) du corps tubulaire extérieur (20), dans un état rétracté de ladite seconde barre (16), manière à venir en prise avec ledit siège (37).
